# FASCICULE DE BREVET EUROPEEN

(11) **EP 1 928 738 B1**
(45) Date de publication et mention de la délivrance du brevet: **07.06.2017**
(21) Numéro de dépôt: 06806820.4
(22) Date de dépôt: 26.09.2006
(51) Int. Cl.: B64D 27/18, B64D 29/02

(54) **DISPOSITIF D'ACCROCHAGE D'UN MOTEUR INTERPOSE ENTRE UNE VOILURE D'AERONEF ET LEDIT MOTEUR**
MOTORMONTAGESTRUKTUR ZWISCHEN EINEM FLUGZEUGFLÜGELSYSTEM UND DEM MOTOR
ENGINE MOUNTING STRUCTURE INTERPOSED BETWEEN AN AIRCRAFT WING SYSTEM AND SAID ENGINE

(30) Priorité: 27.09.2005 FR 0552900
(43) Date de publication de la demande: 11.06.2008
(73) Titulaire: AIRBUS OPERATIONS, 31060 Toulouse (FR)
(72) Inventeur: COMBES, Stéphane, F-31660 Buzet Sur Tarn (FR); LAFONT, Laurent, F-31320 Pechbusque (FR)
(74) Mandataire: Ilgart, Jean-Christophe
(86) Numéro de dépôt international: PCT/EP2006/066736
(87) Numéro de publication internationale: WO 2007/036519

(56) Documents cités:
- EP-A- 1 103 463
- US-A- 5 467 941
- US-A- 5 524 847

## Description

### DOMAINE TECHNIQUE

La présente invention se rapporte à un dispositif d'accrochage d'un moteur destiné à être interposé entre une voilure d'aéronef et le moteur concerné, ainsi qu'à un ensemble moteur comprenant un tel dispositif d'accrochage.

L'invention peut être utilisée sur tout type d'aéronef équipé de turboréacteurs ou de turbopropulseurs.

Ce type de dispositif d'accrochage, également appelé mât d'accrochage ou « EMS » (de l'anglais « Engine Mounting Structure »), permet de suspendre un turbomoteur au-dessous de la voilure de l'aéronef, ou bien de monter ce turbomoteur au-dessus de cette même voilure.

### ETAT DE LA TECHNIQUE ANTERIEURE

Un tel dispositif d'accrochage est en effet prévu pour constituer l'interface de liaison entre un turbomoteur et une voilure de l'aéronef. Il permet de transmettre à la structure de cet aéronef les efforts générés par son turbomoteur associé, et autorise également le cheminement du carburant, des systèmes électriques, hydrauliques, et air entre le moteur et l'aéronef.

Afin d'assurer la transmission des efforts, le dispositif d'accrochage comporte une structure rigide également dénommée structure primaire, souvent du type « caisson », c'est-à-dire formée par l'assemblage de longerons supérieurs et inférieurs et de panneaux latéraux raccordés entre eux par l'intermédiaire de nervures transversales.

D'autre part, le dispositif est muni de moyens d'accrochage interposés entre le turbomoteur et la structure rigide, ces moyens comportant globalement deux attaches moteur, ainsi qu'un dispositif de reprise des efforts de poussée générés par le turbomoteur. Dans l'art antérieur, comme dans le document US 5 467 941, ce dispositif de reprise comprend habituellement deux bielles latérales raccordées d'une part à une partie arrière du carter de soufflante du turbomoteur, et d'autre part à une attache arrière fixée sur le carter central de ce dernier.

De la même façon, le dispositif d'accrochage comporte également une autre série d'attaches constituant un système de montage interposé entre la structure rigide et la voilure de l'aéronef, ce système étant habituellement composé de deux ou trois attaches.

Par ailleurs, le mât est pourvu d'une pluralité de structures secondaires assurant la ségrégation et le maintien des systèmes tout en supportant des éléments de carénage aérodynamique, ces derniers prenant généralement la forme de panneaux rapportés sur les structures. De façon connue de l'homme du métier, les structures secondaires se différencient de la structure rigide par le fait qu'elles ne sont pas destinées à assurer le transfert des efforts provenant du moteur et devant être transmis vers la voilure de l'aéronef.

Parmi les structures secondaires, on compte une structure aérodynamique avant interposée entre la structure rigide et la voilure de l'aéronef, cette structure aérodynamique avant disposant non seulement d'une fonction de carénage aérodynamique, mais permettant également la mise en place, la ségrégation et le cheminement de différents systèmes (air, électrique, hydraulique, carburant). De plus, cette structure aérodynamique avant porte les capots de soufflante du moteur associé, tandis que les capots d'inverseur de poussée sont quant à eux généralement portés par la structure rigide du mât d'accrochage.

Dans les solutions de l'art antérieur, les moyens d'accrochage employés pour réaliser le montage de la structure aérodynamique avant sur la structure rigide sont généralement complexes, peu accessibles, et n'offrent habituellement pas la possibilité d'ajuster précisément la position de la structure aérodynamique avant par rapport à la structure rigide. Par ailleurs, ces moyens d'accrochage constituent généralement un système de montage hyperstatique, peu souhaitable.

### EXPOSÉ DE L'INVENTION

L'invention a donc pour but de proposer un dispositif d'accrochage et un ensemble moteur comprenant un tel dispositif remédiant aux inconvénients mentionnés ci-dessus, relatifs aux réalisations de l'art antérieur.

Pour ce faire, l'invention a pour objet un dispositif d'accrochage d'un moteur destiné à être interposé entre une voilure d'aéronef et le moteur, ce dispositif comportant une structure rigide ainsi qu'une structure aérodynamique avant montée fixement sur cette structure rigide par l'intermédiaire de moyens d'accrochage, la structure aérodynamique avant étant destinée à porter des capots de soufflante du moteur et à être interposée entre la structure rigide et la voilure. Selon l'invention, les moyens d'accrochage comprennent au moins une bielle de longueur réglable dont une extrémité est montée sur la structure rigide, et dont l'autre extrémité est montée sur la structure aérodynamique avant.

Ainsi, l'invention proposée est avantageuse en ce sens qu'elle présente une ou plusieurs bielles de longueur réglable pour assurer le montage de la structure aérodynamique avant sur la structure rigide du dispositif d'accrochage. Les bielles susmentionnées constituent donc une solution peu complexe qui permet d'effectuer un ajustement précis de la position de la structure aérodynamique avant par rapport à la structure rigide, cet ajustement étant alors réalisé en fonction de la géométrie souhaitée pour l'ensemble moteur. A titre d'exemple, le positionnement de la structure aérodynamique avant permet de garantir et de contrôler la position des ferrures de soufflante solidaires des capots de soufflante, par rapport à l'interface mât/moteur de la structure primaire.

De plus, ces bielles sont des éléments aisément accessibles pour un opérateur situé à proximité du dispositif d'accrochage, ce qui facilite les opérations de mise en place et de retrait de la structure aérodynamique avant.

D'autre part, il est précisé que la présence des bielles de longueur réglable ne limite avantageusement que très peu l'accessibilité à l'espace situé entre la structure rigide et la structure aérodynamique avant, dans lequel se situent habituellement des équipements devant rester accessibles aux opérateurs pour leur mise en place ou leur maintenance.

Enfin, il est noté que chaque bielle employée est parfaitement capable de reprendre des efforts dans une unique direction privilégiée, de sorte qu'elle est donc tout à fait indiquée pour former, conjointement avec d'autres éléments des moyens d'accrochage, un système de montage isostatique.

De préférence, les moyens d'accrochage comprennent deux bielles de longueur réglable, chacune disposant d'une extrémité montée sur la structure rigide, et d'une autre extrémité montée sur la structure aérodynamique avant. Avec une telle configuration, on peut alors effectuer un montage assurant que l'une des deux bielles soit en permanence active, c'est-à-dire qu'elle participe à la reprise des efforts transitant entre les deux structures reliées par les moyens d'accrochage, et que l'autre bielle soit uniquement active en cas de défaillance de la première bielle. Ainsi, cette dernière bielle assure seulement une fonction de secours, dite fonction « Fail Safe », de sorte qu'en conditions normales, elle reste inactive et ne vient donc pas rompre la nature isostatique des moyens d'accrochage.

On peut prévoir que les deux bielles de longueur réglable sont disposées de façon symétrique par rapport à un plan vertical médian du dispositif d'accrochage, parallèle à une direction longitudinale de ce dernier. Par ailleurs, les extrémités de chaque bielle de longueur réglable sont préférentiellement montées de façon articulée.

Toujours de manière préférentielle, chaque bielle de longueur réglable est agencée de manière à former un angle inférieur à 20° avec une direction verticale du dispositif d'accrochage, ce qui la rend tout à fait appropriée pour assurer la reprise des efforts selon cette même direction.

De plus, les moyens d'accrochage comprennent une poutre interposée entre la structure rigide et la structure aérodynamique avant, cette poutre constituant alors un moyen complémentaire de la bielle, permettant de former un système de montage isostatique. Cette poutre est de préférence agencée selon une direction transversale du dispositif d'accrochage, par exemple sur toute la largeur de ce mât. De cette manière, avec cette poutre, il est possible d'assurer une reprise des efforts sur toute la largeur du mât d'accrochage, ce qui se traduit avantageusement par une meilleure reprise ainsi que par une diminution des efforts de reprise à l'interface.

Par ailleurs, il est précisé que cette poutre, généralement agencée sur le longeron supérieur de la structure rigide en forme de caisson, est aisément accessible pour un opérateur situé à proximité du dispositif d'accrochage, ce qui facilite les opérations de mise en place et de retrait de la structure aérodynamique avant.

Enfin, on peut prévoir que la poutre est agencée en arrière par rapport à chaque bielle de longueur réglable.

En outre, l'invention a également pour objet un ensemble moteur comprenant un moteur tel qu'un turboréacteur et un dispositif d'accrochage de ce moteur, le dispositif d'accrochage étant tel que celui qui vient d'être décrit.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue schématique de côté d'un ensemble moteur pour aéronef, comprenant un dispositif d'accrochage selon un mode de réalisation préféré de la présente invention ;
- la figure 2 représente une vue partielle détaillée du dispositif d'accrochage appartenant à l'ensemble moteur montré sur la figure 1 ; et
- la figure 3 représente une vue partielle et agrandie en perspective du dispositif d'accrochage montré sur la figure 2.

### EXPOSÉ DÉTAILLÉ DE MODES DE RÉALISATION PRÉFÉRÉS

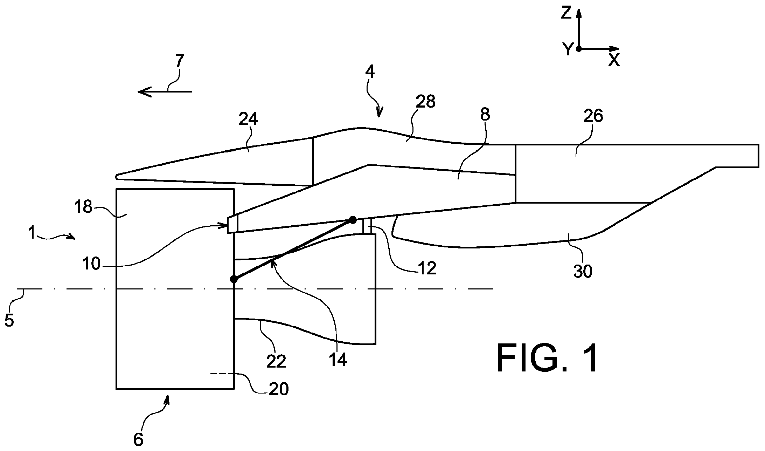

En référence à la figure 1, on voit un ensemble moteur 1 pour aéronef destiné à être fixé sous une aile de cet aéronef (non représentée), cet ensemble 1 comportant un dispositif d'accrochage 4 selon un mode de réalisation préféré de la présente invention, ainsi qu'un moteur 6 tel qu'un turboréacteur accroché sous ce dispositif 4.

Globalement, le dispositif d'accrochage 4 comporte une structure rigide 8, également appelée structure primaire, portant des moyens d'accrochage du moteur 6, ces moyens d'accrochage disposant d'une pluralité d'attaches moteur 10, 12, ainsi que d'un dispositif de reprise des efforts de poussée 14 générés par le moteur 6.

A titre indicatif, il est noté que l'ensemble 1 est destiné à être entouré d'une nacelle (non représentée), et que le dispositif d'accrochage 4 comporte une autre série d'attaches (non représentées) rapportées sur la structure rigide 8 et permettant d'assurer la suspension de cet ensemble 1 sous la voilure de l'aéronef.

Dans toute la description qui va suivre, par convention, on appelle X la direction longitudinale du dispositif 4 qui est également assimilable à la direction longitudinale du turboréacteur 6, cette direction X étant parallèle à un axe longitudinal 5 de ce turboréacteur 6. D'autre part, on appelle Y la direction orientée transversalement par rapport au dispositif 4 et également assimilable à la direction transversale du turboréacteur 6, et Z la direction verticale ou de la hauteur, ces trois directions X, Y et Z étant orthogonales entre-elles.

D'autre part, les termes « avant » et « arrière » sont à considérer par rapport à une direction d'avancement de l'aéronef rencontrée suite à la poussée exercée par le turboréacteur 6, cette direction étant représentée schématiquement par la flèche 7.

Sur la figure 1, on peut donc voir les deux attaches moteur 10, 12, le dispositif de reprise des efforts de poussée 14, la structure rigide 8 du dispositif d'accrochage 4, ainsi qu'une pluralité de structures secondaires rapportées sur la structure rigide 8. Ces structures secondaires assurant la ségrégation et le maintien des systèmes tout en supportant des éléments de carénage aérodynamique seront décrits ci-après.

Il est indiqué que le turboréacteur 6 dispose à l'avant d'un carter de soufflante 18 de grande dimension délimitant un canal annulaire de soufflante 20, et comporte vers l'arrière un carter central 22 de plus petite dimension, renfermant le coeur de ce turboréacteur. Les carters 18 et 22 sont bien entendu solidaires l'un de l'autre.

Comme on peut l'apercevoir sur la figure 1, les attaches moteur 10, 12 du dispositif 4 sont prévues au nombre de deux, et respectivement dénommées attache moteur avant et attache moteur arrière.

Dans ce mode de réalisation préféré de la présente invention, la structure rigide 8 prend la forme d'un caisson s'étendant de l'arrière vers l'avant, sensiblement selon la direction X.

Le caisson 8 prend alors la forme d'un mât de conception similaire à celle habituellement observée pour les mâts d'accrochage de turboréacteurs, notamment en ce sens qu'il est pourvu de nervures transversales (non représentées) prenant chacune la forme d'un rectangle orienté dans un plan YZ.

Les moyens d'accrochage de ce mode de réalisation préféré comportent tout d'abord l'attache moteur avant 10 interposée entre une extrémité avant de la structure rigide 8 également appelée pyramide, et une partie supérieure du carter de soufflante 18. L'attache moteur avant 10 est conçue de manière classique et connue de l'homme du métier.

D'autre part, l'attache moteur arrière 12, également réalisée de façon classique et connue de l'homme du métier, est quant à elle interposée entre la structure rigide 8 et le carter central 22.

Toujours en référence à la figure 1, on compte parmi les structures secondaires du mât 4 une structure aérodynamique avant 24, une structure aérodynamique arrière 26, un carénage de raccordement 28 des structures aérodynamiques avant et arrière, et un carénage aérodynamique arrière inférieur 30.

Globalement, ces structures secondaires sont des éléments classiques identiques ou similaires à ceux rencontrés dans l'art antérieur, et connus de l'homme du métier.

Plus précisément, la structure aérodynamique avant 24 est placée sous la voilure et au-dessus de la structure primaire 8. Elle est montée fixement sur la structure rigide 8, et présente une fonction de profil aérodynamique entre une partie supérieure des capots de soufflante articulés sur celle-ci, et le bord d'attaque de la voilure. Cette structure aérodynamique avant 24 dispose alors non seulement d'une fonction de carénage aérodynamique, mais permet également la mise en place, la ségrégation et le cheminement de différents systèmes (air, électrique, hydraulique, carburant). De plus, la partie avant de cette structure 24 n'étant pas au contact de la structure rigide 8, il est habituellement interposé un échangeur thermique dans l'espace défini entre ces deux éléments.

Directement dans le prolongement arrière de cette structure 24, toujours sous la voilure et monté au-dessus de la structure rigide 8, se trouve le carénage de raccordement 28, également appelé « karman ». Ensuite, toujours vers l'arrière, le carénage de raccordement 28 est prolongé par la structure aérodynamique arrière 26, qui contient la majeure partie des équipements hydrauliques. Cette structure 26 est de préférence située entièrement en arrière par rapport à la structure rigide 8, et est donc attachée sous la voilure de l'aéronef.

Enfin, sous la structure rigide 8 et la structure aérodynamique arrière 26, se trouve le carénage aérodynamique arrière inférieur 30, également appelé « bouclier » ou « Aft Pylon Fairing ». Ses fonctions essentielles sont la formation d'une barrière anti-feu, et la formation d'une continuité aérodynamique entre la sortie du moteur et le mât d'accrochage.

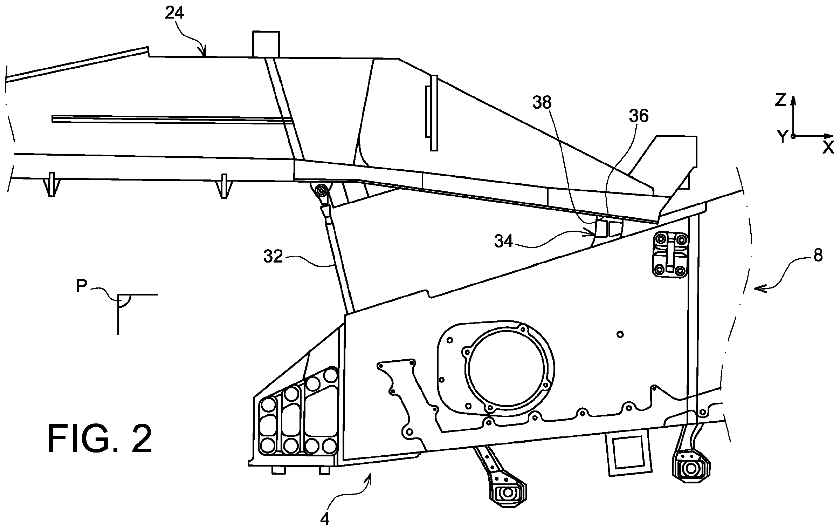

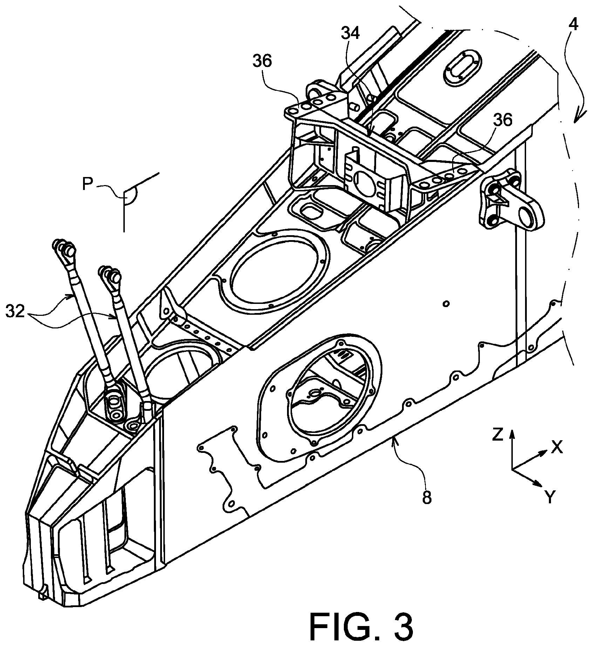

En référence à présent aux figures 2 et 3, on peut apercevoir des moyens d'accrochage de la structure aérodynamique avant 24 sur la structure rigide 8.

Ces moyens comprennent tout d'abord deux bielles de longueur réglable 32, disposées de façon symétrique par rapport à un plan P vertical médian du dispositif d'accrochage, parallèle à la direction X. Il est noté que de façon connue, ce même plan P constitue un plan de symétrie pour la structure rigide 8.

L'extrémité inférieure de chaque bielle 32 est raccordée de façon articulée sur le longeron supérieur de la structure rigide 8 en forme de caisson, tandis que l'extrémité inférieure de chaque bielle 32 est raccordée de façon articulée sur un longeron inférieur de la structure aérodynamique avant 24. Les bielles 32 sont raccordées au niveau d'une partie d'extrémité avant de la structure rigide 8, et sont préférentiellement inclinées d'un angle inférieur à 20° par rapport à la direction Z, de préférence de manière à s'étendre vers l'avant en se rapprochant de structure aérodynamique avant 24, comme cela est montré sur la figure 2.

La conception des bielles 32 est donc telle qu'elle permet le réglage de leur longueur. A cet égard, il peut être employé tout type de bielle connu de l'homme du métier et capable de remplir cette fonction de longueur réglable. Il peut notamment s'agir de bielles dont l'une ou les deux extrémités peuvent être déplacées par rapport à un corps de bielle, par un système mécanique connu. Il pourrait aussi s'agir de bielles réalisées en deux parties sensiblement identiques portant chacune une extrémité, et dont la longueur sur laquelle ces deux parties sont imbriquées conditionne la longueur totale de la bielle.

Le fait de pouvoir régler la longueur des bielles 32 permet tout d'abord de pouvoir ajuster précisément la position de la structure aérodynamique avant 24 par rapport à la structure rigide 8, ainsi que par rapport à tout autre élément de l'ensemble moteur. De plus, cela permet aisément d'établir un montage différencié entre les deux bielles 32, de sorte que l'une d'elle soit en permanence active, c'est-à-dire qu'elle participe à la reprise des efforts transitant entre les deux structures 24 et 8, et que l'autre bielle soit uniquement active en cas de défaillance de la première bielle. Ainsi, cette dernière bielle assure seulement une fonction de secours, dite fonction « Fail Safe », de sorte qu'en conditions normales, elle n'assure pas le passage d'efforts entre les deux structures 24 et 8.

La bielle 32 active est dans ce cas destinée à assurer la reprise des efforts s'exerçant principalement selon la direction Z, mais pas ceux s'exerçant selon les direction X et Y.

Associée à ces bielles 32, les moyens d'accrochage de la structure 24 sur la structure 8 comprennent également une poutre 34, orientée selon la direction Y et s'étendant de préférence sur toute la largueur du longeron supérieur de la structure rigide sur lequel elle est montée fixement.

Comme on le voit le mieux sur la figure 3, cette poutre 34 est de préférence double pour des raisons de sécurité, c'est-à-dire formée par deux poutres superposées selon la direction X. Elle présente au niveau de chacune des ses deux extrémité une interface de fixation 36 destinée à recevoir une interface de fixation 38 prévue sur la structure 24.

Plus précisément, on peut voir que chaque demi-interface de fixation 36 prend préférentiellement la forme d'une surface sensiblement plane s'étendant selon un plan XY situé légèrement au-dessus du longeron supérieur de la structure 8 en forme de caisson. Une fois les interfaces 36, 38 en contact, celles-ci sont solidarisées l'une à l'autre par l'intermédiaire de boulons ou éléments similaires.

La poutre 34 se situe à l'arrière des bielles 32 et coopère avec une partie d'extrémité arrière de la structure 24, comme on peut le voir sur la figure 2.

Avec une telle conception, la poutre 34 est alors conçue pour reprendre des efforts exercés principalement selon la direction transversale Y, et sa conception retenue est donc préférentiellement d'un type appelé à deux « demi-interfaces de fixation » permettant à chacune de ces deux demi-interfaces 36 de reprendre des efforts exercés principalement selon la direction X et selon la direction verticale Z.

De cette manière, les efforts s'exerçant selon la direction longitudinale X et selon la direction Y sont exclusivement repris par les deux demi-interfaces de fixation de la poutre 34, et les efforts s'exerçant selon la direction verticale Z sont repris conjointement par la bielle active 32 et par les deux demi-interfaces de fixation de la poutre 34.

D'autre part, la reprise du moment s'exerçant selon la direction X et selon la direction Z est assurée uniquement par les deux demi-interfaces de fixation de la poutre 34, tandis que la reprise des moments s'exerçant selon la direction Y est assurée verticalement conjointement par ces deux demi-interfaces, et par la bielle active 32.

Les moyens d'accrochage 34, 36 qui ont été décrits ci-dessus permettent donc de constituer un système de montage isostatique de la structure aérodynamique avant 24 sur la structure rigide 8 du mât 4.

Bien entendu, diverses modifications peuvent être apportées par l'homme du métier au dispositif d'accrochage 4 et à l'ensemble moteur 1 qui viennent d'être décrits, uniquement à titre d'exemples non limitatifs. A cet égard, on peut notamment indiquer qui si l'ensemble moteur 1 a été présenté dans une configuration adaptée pour qu'il soit suspendu sous la voilure de l'aéronef, cet ensemble 1 pourrait également se présenter dans une configuration différente lui permettant d'être monté au-dessus de cette même voilure.

## Revendications

1. Dispositif d'accrochage (4) d'un moteur (6) destiné à être interposé entre une voilure (2) d'aéronef et ledit moteur (6), ledit dispositif comportant une structure rigide (8) ainsi qu'une structure aérodynamique avant (24) montée fixement sur ladite structure rigide (8) par l'intermédiaire de moyens d'accrochage, ladite structure aérodynamique avant étant destinée à porter des capots de soufflante du moteur et à être interposée entre ladite structure rigide et ladite voilure,
**caractérisé en ce que** lesdits moyens d'accrochage comprennent au moins une bielle de longueur réglable (32) dont une extrémité est montée sur ladite structure rigide (8), et dont l'autre extrémité est montée sur ladite structure aérodynamique avant (24).

2. Dispositif d'accrochage (4) d'un moteur (6) selon la revendication 1, **caractérisé en ce que** lesdits moyens d'accrochage comprennent deux bielles de longueur réglable (32), chacune disposant d'une extrémité montée sur ladite structure rigide (8), et d'une autre extrémité montée sur ladite structure aérodynamique avant (24).

3. Dispositif d'accrochage (4) d'un moteur (6) selon la revendication 2, **caractérisé en ce que** les deux bielles de longueur réglable (24) sont disposées de façon symétrique par rapport à un plan (P) vertical médian du dispositif d'accrochage, parallèle à une direction longitudinale (X) de ce dernier.

4. Dispositif d'accrochage (4) d'un moteur (6) selon l'une quelconque des revendications précédentes, **caractérisé en ce que** les extrémités de chaque bielle de longueur réglable (32) sont montées de façon articulée.

5. Dispositif d'accrochage (4) d'un moteur (6) selon l'une quelconque des revendications précédentes, **caractérisé en ce que** chaque bielle de longueur réglable (32) est agencée de manière à former un angle inférieur à 20° avec une direction verticale (Z) du dispositif d'accrochage.

6. Dispositif d'accrochage (4) d'un moteur (6) selon l'une quelconque des revendications précédentes, **caractérisé en ce que** lesdits moyens d'accrochage comprennent en outre une poutre (34) interposée entre ladite structure rigide (8) et ladite structure aérodynamique avant (24).

7. Dispositif d'accrochage (4) d'un moteur (6) selon la revendication 6, **caractérisé en ce que** ladite poutre (34) est agencée selon une direction transversale (Y) du dispositif d'accrochage.

8. Dispositif d'accrochage (4) d'un moteur (6) selon la revendication 6 ou la revendication 7, **caractérisé en ce que** ladite poutre (34) est agencée en arrière par rapport à chaque bielle de longueur réglable (32).

9. Ensemble moteur (1) comprenant un moteur (6) et un dispositif d'accrochage (4) du moteur (6), **caractérisé en ce que** ledit dispositif d'accrochage est un dispositif selon l'une quelconque des revendications précédentes.

## Patentansprüche

1. Montagestruktur (4) eines Motors (6), die dazu bestimmt ist, zwischen einem Tragwerk (2) eines Luftfahrzeugs und dem Motor (6) zwischengefügt zu werden, wobei die Struktur eine starre Struktur (8) sowie eine vordere aerodynamische Struktur (24), die fest auf der starren Struktur (8) mit Hilfe von Montagemitteln befestigt ist, umfasst, wobei die vordere aerodynamische Struktur dazu bestimmt ist, Gebläseabdeckungen des Motors zu tragen und zwischen der starren Struktur und dem Tragwerk zwischengefügt zu werden,
**dadurch gekennzeichnet, dass** die Montagemittel mindestens eine Stange mit einstellbarer Länge (32) umfassen, von der ein Ende auf der starren Struktur (8) befestigt ist, und deren anderes Ende auf der vorderen aerodynamischen Struktur (24) montiert ist.

2. Montagestruktur (4) eines Motors (6) nach Anspruch 1, **dadurch gekennzeichnet, dass** die Montagemittel zwei Stangen mit einstellbarer Länge (32) umfassen, die jeweils über ein Ende verfügen, das auf der starren Struktur (8) montiert ist, und über ein anderes Ende, das auf der vorderen aerodynamischen Struktur (24) montiert ist.

3. Montagestruktur (4) eines Motors (6) nach Anspruch 2, **dadurch gekennzeichnet, dass** die zwei Stangen mit einstellbarer Länge (24) symmetrisch in Bezug auf eine mittlere Vertikalebene (P) der Montagestruktur parallel zu einer Längsrichtung (X) dieser letztgenannten angeordnet sind.

4. Montagestruktur (4) eines Motors (6) nach einem der vorhergehenden Ansprüche, **dadurch gekennzeichnet, dass** die Enden jeder Stange mit einstellbarer Länge (32) gelenkig montiert sind.

5. Montagestruktur (4) eines Motors (6) nach einem der vorhergehenden Ansprüche, **dadurch gekennzeichnet, dass** jede Stange mit einstellbarer Länge (32) derart vorgesehen ist, dass sie einen Winkel kleiner als 20° mit einer Vertikalrichtung (Z) der Montagestruktur bildet.

6. Montagestruktur (4) eines Motors (6) nach einem der vorhergehenden Ansprüche, **dadurch gekennzeichnet, dass** die Montagemittel ferner einen Träger (34) umfassen, der zwischen der starren Struktur (8) und der vorderen aerodynamischen Struktur (24) zwischengefügt ist.

7. Montagestruktur (4) eines Motors (6) nach Anspruch 6, **dadurch gekennzeichnet, dass** der Träger (34) in einer Querrichtung (Y) der Montagestruktur angeordnet ist.

8. Montagestruktur (4) eines Motors (6) nach Anspruch 6 oder Anspruch 7, **dadurch gekennzeichnet, dass** der Träger (34) hinten in Bezug auf jede Stange mit einstellbarer Länge (32) angeordnet ist.

9. Motoreinheit (1), umfassend einen Motor (6) und eine Montagestruktur (4) des Motors (6), **dadurch gekennzeichnet, dass** die Montagestruktur eine Struktur nach einem der vorhergehenden Ansprüche ist.

## Claims

1. Suspension device (4) for suspension of an engine (6), designed to be inserted between an aircraft wing (2) and said engine (6), said device comprising a rigid structure (8) and a forward aerodynamic structure (24) mounted fixed on said rigid structure (8) through suspension means, said forward aerodynamic structure being designed to carry engine fan casings and to be inserted between said rigid structure and said wing,
**characterised in that** said suspension means comprise at least one adjustable length connecting rod (32) of which one end is mounted on said rigid structure (8), and the other end is mounted on said forward aerodynamic structure (24).

2. Suspension device (4) for suspension of an engine (6) according to claim 1, **characterised in that** said suspension means comprise two adjustable length connecting rods (32), each being provided with one end mounted on said rigid structure (8), and the other end mounted on said forward aerodynamic structure (24).

3. Suspension device (4) for suspension of an engine (6) according to claim 2, **characterised in that** the two adjustable length connecting rods (24) are arranged symmetrically about a vertical median plane (P) of the suspension device, parallel to a longitudinal direction (X) of this device.

4. Suspension device (4) for suspension of an engine (6) according to any one of the previous claims, **characterised in that** the ends of each adjustable length rod (32) are mounted so as to be articulated.

5. Suspension device (4) for suspension of an engine (6) according to any one of the previous claims, **characterised in that** each adjustable length rod (32) is arranged so as to form an angle of less of 20° with a vertical direction (Z) of the suspension device.

6. Suspension device (4) for suspension of an engine (6) according to any one of the previous claims, **characterised in that** said suspension means also comprise a beam (34) inserted between said rigid structure (8) and said forward aerodynamic structure (24).

7. Suspension device (4) for suspension of an engine (6) according to claim 6, **characterised in that** said beam (34) is arranged along a transverse direction (Y) of the suspension device.

8. Suspension device (4) for suspension of an engine (6) according to claim 6 or claim 7, **characterised in that** said beam (34) is arranged to be aft from each adjustable length rod (32).

9. Engine assembly (1) comprising an engine (6) and a suspension device (4) for suspension of an engine (6), **characterised in that** said suspension device is a device according to any one of the previous claims.
